# EUROPEAN PATENT SPECIFICATION

(11) **EP 4 444 921 B1**
(45) Date of publication and mention of the grant of the patent: **04.02.2026**
(21) Application number: 22850609.3
(22) Date of filing: 06.12.2022
(51) Int. Cl.: C21C 5/52, F27B 3/08, F27B 3/18, F27D 99/00

(54) **ELECTRIC ARC FURNACE FOR MELTING METAL MATERIAL AND STEEL PLANT COMPRISING SAID ELECTRIC ARC FURNACE**
ELEKTROLICHTBOGENOFEN ZUM SCHMELZEN VON METALLMATERIAL UND STAHLANLAGE MIT DIESEM ELEKTROLICHTBOGENOFEN
FOUR ÉLECTRIQUE À ARC PERMETTANT LA FUSION D'UN MATÉRIAU MÉTALLIQUE ET ACIÉRIE COMPRENANT LEDIT FOUR ÉLECTRIQUE À ARC

(30) Priority: 07.12.2021 IT 202100030824
(43) Date of publication of application: 16.10.2024
(73) Proprietor: DANIELI & C. OFFICINE MECCANICHE S.P.A., 33042 Buttrio (UD) (IT)
(72) Inventor: ANSOLDI, Marco, 33100 UDINE (IT); PATRIZIO, Damiano, 33010 PAGNACCO (UD) (IT); TERLICHER, Stefano, 33043 CIVIDALE DEL FRIULI (UD) (IT); MARCONI, Gianfranco, 33100 UDINE (IT)
(74) Representative: Petraz, Gilberto Luigi
(86) International application number: PCT/IT2022/050315
(87) International publication number: WO 2023/105541

(56) References cited:
- EP-A1- 0 515 249
- WO-A2-2005/052196
- GB-A- 2 076 858
- KR-B1- 101 367 388
- US-A- 4 027 095

## Description

### FIELD OF THE INVENTION

The present invention concerns an electric arc furnace and a steel plant comprising said electric arc furnace, which can be used in processes for melting metal material, preferably, but not exclusively, with a substantially continuous charge.

### BACKGROUND OF THE INVENTION

Steel plants for melting metal material are known, which comprise at least one electric arc melting furnace powered with alternating current (AC), or direct current (DC). The furnace normally comprises both a container with a substantially cylindrical shape, which has a lower part, or hearth, and an upper part which is open at the top, and which as a whole internally defines a melting chamber, and also a cover, or roof, which closes the container.

The hearth is usually made of refractory material disposed on a metal frame and a metal charge is melted inside it, for example scrap iron, sponge iron or directly reduced iron (DRI), iron pellets or hot briquetted iron (HBI), or other ferrous materials, having a certain volume, suitable for that of the hearth. Indicatively, a single metal charge has a weight in the order of a few tons.

The open upper part of the container comprises, or consists of, a perimeter wall, usually cylindrical, able to contain the mass of scrap to be melted during the initial steps of the process, when it is more voluminous. Moreover, the purpose of the perimeter wall is to contain the layer of slag that covers the bath of steel and is equipped with water-cooled lateral panels suitable to protect the non-refractory upper part from thermal stresses.

In the perimeter wall there is at least one outlet aperture, known by the term "slagging aperture", through which the slag produced by the melt can be selectively extracted. The slag contains the unwanted elements removed from the bath, which are collectively called "slag" in jargon. The slagging aperture can be selectively closed by means of a door, for example a gate valve; sometimes, this door may not be present, or it may remain at least partly if not completely open during the melt, to allow injection lances or temperature measuring probes to be introduced, or samples to be taken, as well as for adding additives and slagging agents. In any case, in the state of the art, the slagging door is not made to be watertight as it is positioned above the level of the bath of steel.

Known electric arc furnaces also comprise an upper cover, called roof, of the type that can be selectively opened, which is provided with a central part made of refractory material, also called "arch", having some apertures or through holes, of which there are usually three in the case of alternating current power supply, and which are also known by the term "cells". These through holes allow to insert, with clearance, corresponding graphite electrodes which enter the melting chamber and are configured to determine the development of the electric arc, when they are electrically powered, thus allowing the melt of the metal charge.

The roof is also provided with at least one more aperture, also known by the term "fourth hole", in which a pipe or duct is inserted in order to suction the process fumes, which are then conveyed to a fume suction and processing plant called primary.

The metal charge can be loaded or fed either through suitable charge buckets, which release it through the upper aperture of the furnace, or through a continuous loading system through a lateral aperture made in the perimeter wall.

If the metal charge is fed through charge buckets, in order to reach the quantity suitable to make each melt, it is necessary to open the roof even two or three times in order to unload the corresponding buckets, thus releasing enormous quantities of fumes which can also be very polluting if released into the atmosphere, especially in the case of scrap that is dirty, or rich in oils, or damp. Atmospheric pollutants are represented not only by powders, and among these heavy metal oxides, but also by gaseous compounds including CO, NOx, VOC, dioxins and furans. In fact, during the unloading of the buckets, the fumes are not suctioned by the suction ducts of the primary fume processing plant which captures the emissions directly from the fourth hole in the roof of the furnace; in fact, they are released outside the melting chamber and only subsequently can they be captured by a hood disposed above the electric arc furnace, generally on the ceiling of the shed where the furnace itself is located, which suctions the fumes and conveys them to another processing plant, called secondary. Furthermore, when the buckets with the metal material have been unloaded into the melting chamber, specific radial gas burners are activated to help melt the charge and thus allow the electrodes to enter the metal charge more quickly and decrease the melting time; in this way, however, the use of the gas burners produces more polluting substances.

The burners, in fact, generally use methane, which when burning generates CO and CO₂ as well as, obviously, thermal energy.

When feeding by means of a continuous charging system, the metal charge is instead fed by means of a feed conveyor, which is configured to be inserted in a selectively removable way in an aperture which, in general, is made on the perimeter wall of the furnace. Moreover, the feed conveyor is associated, at least for a part thereof, with a preheating tunnel through which the process fumes produced in the furnace are suctioned, so that their heat can be exploited for the purpose of preheating the feed material to be melted and, consequently, to reduce and/or optimize the times and consumption of the melting process.

During the melt, oxygen is introduced by means of suitable lances, with the purpose of oxidizing the unwanted elements contained in the bath, such as silicon, chromium, molybdenum, nickel, phosphorus for example; the oxides and non-metal compounds which are formed, since they are less dense than the liquid bath, migrate to the surface and are incorporated into the slag. Furthermore, the injection of oxygen is necessary to carry out the decarburization of the bath, an operation which allows to take the carbon content to the desired value, equal to approximately 0.08%. The decarburization reaction, which is inherent in the refining process of the liquid bath, inevitably produces CO, given that the injected oxygen binds to part of the carbon present in the bath. The injection of oxygen, however, also leads to the oxidation of the iron present in the metal bath, which has to then be deoxidized again in order not to negatively impact the yield of the furnace, through injections of carbon in the form of powder, which are carried out through a plurality of injectors present in, or above, the melting chamber. The reaction of the iron oxide with the carbon returns the molecules to the state of metal iron but at the same time generates large quantities of CO which, depending on the availability of oxygen, in turn burns and degrades into CO₂, releasing further heat which ends up in the process fumes.

The precarious balance between the injection of oxygen and carbon can lead to the production of very high quantities of CO and therefore CO₂ for each melting cycle.

The residual CO that does not burn inside the furnace is suctioned by the primary fume processing plant, through the fourth hole or through the continuous charging and/or preheating system, the duct of which, as is known, works in depression. Any residual fumes are also captured by the secondary fume processing plant, especially, as we have seen, with the bucket loading method.

When loading with buckets, an empty space or gap is maintained between the entry of the suction pipe inserted in the fourth hole of the furnace and the duct of the primary fume processing plant, which allows the massive suction of air inside the duct, which is necessary for the post-combustion step of the residual CO, so as to degrade it to CO₂, and at the same time to dilute and cool the fumes. The cooling prevents or at least reduces the formation of NOx by thermal means in the fume suction duct following the post-combustion of the CO.

In the case of continuous charge, the fumes are instead conveyed into the preheating tunnel and the post-combustion of the CO is carried out in said tunnel by means of injections of air or oxygen.

The fans of the primary fume extraction and processing plant keep the furnace under depression inside it, in order to prevent the process fumes from leaking into the surrounding environment, but, due to all the apertures in the furnace, there is the disadvantage that there are huge entries of air inside the melting chamber (so-called "false air"), even when the roof is closed. In fact, the air enters through the passage gaps present in said apertures which, in the state of the art, are not hermetically sealed.

Therefore, to keep the furnace in depression, the fans of the suction plant are made to work in order to remove a much higher gas flow rate than that necessary to remove the process gases alone. In this way, the injections of carbon powder are less efficient, since a good portion of the carbon, instead of reaching the bath, is sucked into the suction flow. To compensate for this loss and be able to comply with the needs described above, it is necessary to introduce a surplus of carbon into the furnace and the excess part, which is deposited on the slag (free carbon), reacts with the oxygen present, producing more CO.

Moreover, the false air that enters through the apertures as above contains nitrogen (N) which in the presence of oxygen and high temperatures, comprised between about 1500°C and about 850°C, as for example in correspondence with the electrodes, leads to the formation of polluting compounds NOx.

Among the prior art documents, patent application GB 2.076.858 A is known, which describes a metallurgical process of a direct combustion steel converter or, possibly, of an electric furnace. In this prior art document, the steel converter comprises oxy-fuel or air-fuel burners; it does not provide to use any electrode to melt the metal charge present in the furnace. Moreover, this prior art document does not address the problems of oxidation inside the furnace.

Document US 4.027.095 A describes a hermetic electric arc furnace for the production of stainless steel comprising vacuum sealing means between the roof and the body of the furnace, cold cooled, telescopic sealing means between the roof and an electrode, and a discharge aperture associated with the combustion chamber of the furnace to which there is connected a vacuum pump to reduce the internal pressure of the electric arc furnace.

Document EP 0.515.249 A1 describes a closing device to create a partial seal between an electrode of an electric arc furnace and the corresponding aperture present in the roof of the furnace itself. In particular, the closing device comprises an annular closing element which rests sliding on the aperture, and which is provided with an axial cavity into which the electrode is inserted.

The Applicant's document WO 2005/052196 A2 describes a plant comprising an electric arc furnace for preheating, transforming and melting a metal charge, in which the furnace is weighed at least periodically in order to detect the amount of metal charge present inside it in order to adjust the temperature of the liquid bath to a predetermined value.

There is therefore a need to perfect an electric arc furnace which can overcome at least one of the disadvantages of the state of the art.

To do this it is necessary to solve the technical problem of preventing, or in any case greatly limiting, the unwanted or uncontrolled entry of air inside the electric arc furnace during the entire melting step of the metal charge, but in general for as long as possible.

In particular, one purpose of the present invention is to perfect a completely sealed electric arc furnace for melting metal material which allows to prevent, or greatly limit, the unwanted or uncontrolled entry of air inside it, at least during the melting step.

Another purpose of the present invention is to perfect or provide an electric arc furnace for melting metal material which allows to reduce the generation of fumes with high quantities of CO, CO₂ and NOx.

Another purpose of the present invention is to perfect an electric arc furnace, even of a known type, or to produce a new one, which allows to reduce the direct emissions of CO₂ by more than 50% compared to traditional plants.

Another purpose of the present invention is to perfect or produce an electric arc furnace for melting metal material which allows to limit the use of chemical energy in the furnace, in particular the injections of carbon and oxygen.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, an electric arc furnace according to the present invention, usable for melting a metal charge, comprises both a container having a melting chamber and a plurality of main apertures, which include at least an upper aperture, a lateral outlet aperture to remove the slag that forms on the surface of the molten metal charge, and a lateral feed aperture to continuously feed the metal charge into the melting chamber, and also a cover that can be positioned on the upper aperture to selectively close it, wherein the cover is provided with one or more first secondary apertures into which respective electrodes can be inserted with clearance to melt the metal charge.

In accordance with one aspect of the present invention, the electric art furnace also comprises sealing means, at least one of which is associated with at least one of the main apertures, in such a way as to prevent, or limit as much as possible, the unwanted or uncontrolled entry of air coming from the external environment, during the process of melting the metal charge.

In accordance with another aspect of the present invention, the sealing means are preferably associated with at least two, even more preferably with all the main apertures.

The sealing means comprise, for each of the main apertures, at least a respective first sealing member, a second sealing member and a third sealing member.

Sealing an electric arc furnace in this way achieves at least the advantage that an atmosphere that is independent from the air of the external environment, with a relatively low oxygen percentage, is created inside the electric arc furnace, which significantly prevents and/or limits the formation of CO, CO₂ and NO_{X}.

In accordance with one aspect of the present invention, the container comprises at least one perimeter wall at the top of which the upper aperture is present, and the first sealing member is interposed between the perimeter wall and the cover and is configured to make the closure of the cover hermetic.

In accordance with another aspect of the present invention, the first sealing member is at least partly disposed on an upper surface of the perimeter wall and comprises one or more sealing elements capable of guaranteeing a hermetic seal at least under the action of the weight of the cover.

If the electric arc furnace comprises a closing member associated with the lateral outlet aperture where the continuous charge is introduced, the second sealing member is associated with the closing member to hermetically insulate the lateral outlet aperture.

In accordance with another aspect of the present invention, the cover comprises a central part in which the one or more first secondary apertures are present, which are communicating fluidically with the melting chamber. On the central part of the cover there is disposed an upper panel in which there are one or more second secondary apertures, vertically aligned with the one or more first secondary apertures for the passage of the electrodes and communicating fluidically with the external environment. Furthermore, the sealing means comprise at least one hollow space made between the upper panel and the central part, wherein the hollow space communicates fluidically both with the one or more first secondary apertures, and also with the one or more second secondary apertures.

In accordance with another aspect of the present invention, the hollow space is made in such a way as to create an intermediate space between the external environment and the melting chamber, inside which there is created a mixed atmosphere which comprises both internal process fumes coming from the melting chamber and also air coming from the external environment, both of which can enter the hollow space through the one or more first secondary apertures and, respectively, through the one or more second secondary apertures provided in the cover.

In accordance with another aspect of the present invention, with the hollow space there is associated a suction mean configured to suction the mixed atmosphere and thus create a depression in the hollow space so that, inside the latter, there is a hollow space pressure (P.ELT) which is lower than the atmospheric pressure (P.ATM) of the external environment and than an operating pressure (P.EAF) present inside the melting chamber.

The feed of the metal charge can occur continuously through an autonomous feed device which is not part of the electric arc furnace in the strict sense, but which can be associated with it, for example the feed device is a continuous charge and/or preheating feed system.

In accordance with another aspect of the present invention, the cover also comprises an additional through aperture to which feed means can be connected, which are configured to feed, from above, directly reduced iron (DRI) or hot briquetted iron (HBI). The feed means can preferably comprise both a feed duct, which can be inserted, preferably in a sealed manner, in the additional through aperture, and also a hopper, connected to the feed duct and preferably pressurized.

In accordance with another aspect of the present invention, the cover also comprises a suction aperture to which primary suction means can be connected which are configured to suction the process fumes from the melting chamber. Furthermore, the suction aperture is disposed substantially on the opposite part to the additional through aperture with respect to the first secondary apertures.

In accordance with another aspect of the present invention, a steel plant comprises both an electric arc furnace as above to melt a metal charge, and also a feed device to feed the metal charge into the electric arc furnace, with which there is associated, at least for a part, a preheating tunnel, and which comprises a slide provided with an end which can be selectively inserted, at least partly, into the feed aperture. In particular, the third sealing member is a sealed closure device which can be connected to the slide and which is configured to selectively close in a sealed manner the space possibly existing between the slide and the electric arc furnace when said end is inserted in the lateral feed aperture; the sealing means and the sealed closure device are such as to prevent, or limit as much as possible, the unwanted or uncontrolled entry of air coming from the external environment into the electric arc furnace.

In accordance with another aspect of the present invention, the sealed closure device comprises a sleeve which, during use, surrounds the slide and has a front surface facing toward and able to be associated with the electric arc furnace and provided with an additional sealing member configured to contact a perimeter wall of the electric arc furnace, in correspondence with the feed aperture.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic front view, sectioned in a median zone, of an electric arc furnace according to the present invention;
- fig. 2 is a section along the line II-II of fig. 1;
- fig. 3 is a section along the line III-III of fig. 2, on an enlarged scale;
- fig. 4 shows an enlarged detail of fig. 1;
- figs. 5A and 5B are an operating sequence of a closing member of a device for feeding a metal charge toward the inside of the electric arc furnace of fig. 1.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

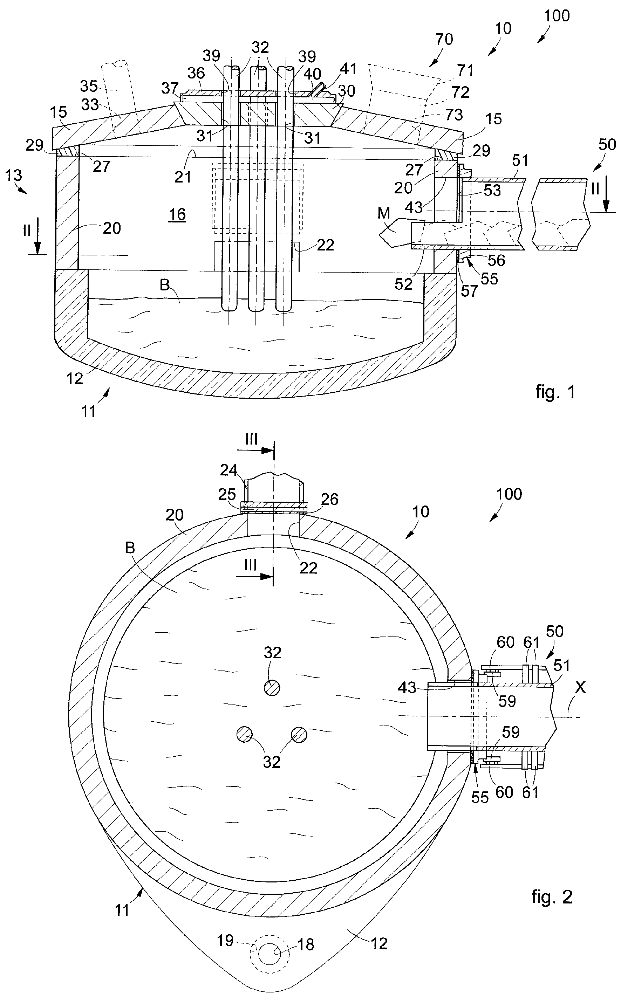

With reference to fig. 1, an electric arc furnace 10 according to the present invention can be used to melt a metal charge M, as defined above, and is installed, for example, in a steel plant 100, substantially of a known type and not shown in detail, with the exception of some innovative aspects which will be described below.

The electric arc furnace 10 comprises a container 11 having an upper part 13, with a substantially cylindrical plan shape, and a lower part, or hearth 12, with a substantially oval plan shape. A cover, or roof 15, of the selectively openable type is placed to close the upper part 13.

The container 11 internally defines, as a whole, a melting chamber 16 in which the metal charge M is inserted for the subsequent melt and in which the fumes deriving from the melting process, also called process fumes, are formed.

The hearth 12 has a concave bottom which is made of refractory material capable of withstanding high temperatures, higher than 1,600°C, and the melt of the metal charge M occurs inside it. The hearth 12, as in the prior art, is normally provided with an eccentric tapping hole 18 (fig. 2), known to the people of skill in the art with the term EBT (Eccentric Bottom Tap-hole), through which the molten steel can be tapped. The eccentric tapping hole 18, during the melting operations, is kept hermetically closed by a mobile closing member 19, of a type known per se (slide gate).

The upper part 13, on the other hand, comprises, or consists of, a substantially cylindrical perimeter wall 20 (figs. 1 and 2), having an upper aperture 21 which can be closed selectively by the roof 15, and is provided with water-cooled panels, of the type known and not shown in the drawings, suitable to protect the upper part of the melting chamber 16 from thermal stresses.

A lateral outlet aperture, or slagging aperture 22 (figs. 1, 2 and 3), is also made in the perimeter wall 20, through which it is possible to extract, or remove, in a known manner, the slag that forms on the upper layer of the liquid bath B.

The slagging aperture 22 is operatively associated with a shutter, or slagging door 25, possibly cooled in a known manner.

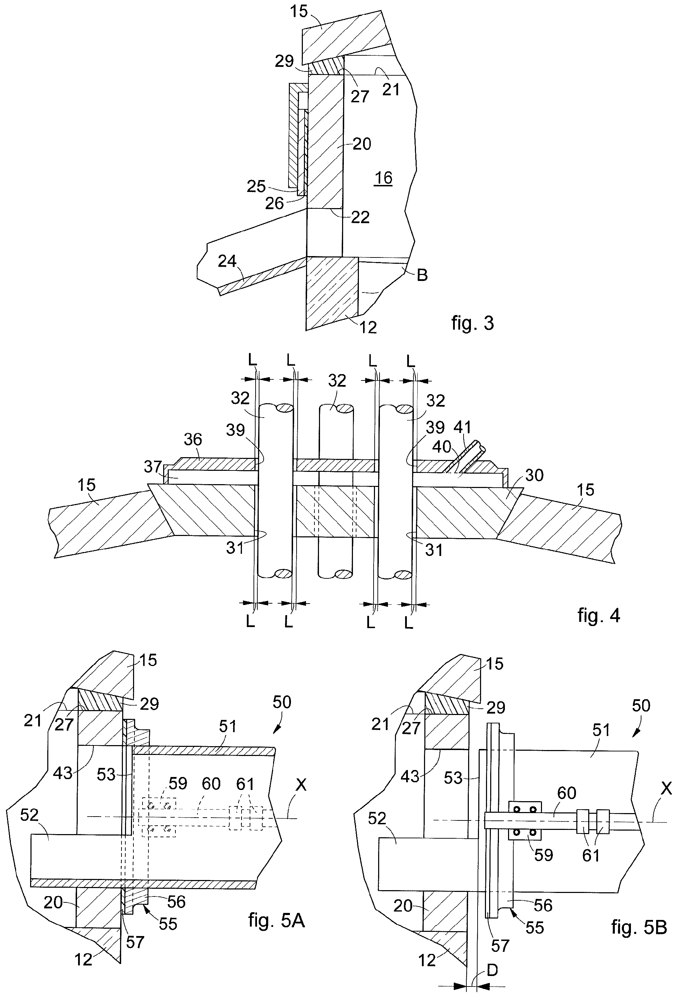

In accordance with one aspect of the present invention, the slagging door 25, on the surface facing the perimeter wall 20, is provided with a mechanical sealing member 26 (figs. 1 and 3) to create a hermetic seal of the slagging aperture 22 when the slagging door 25 is closed.

In particular, the slagging door 25 is configured to be hermetically closed during the melt of the metal charge M, so as to prevent the unwanted or uncontrolled entry of external air into the melting chamber 16, and to be open only for the slagging operation, just enough to produce an outgoing laminar flow of the slag toward an outlet channel 24, trying to prevent, or at least limit as much as possible, the entry of external air into the melting chamber 16. The slagging door 25 in figs. 1 and 3 is represented in the open or raised position, while in fig. 2, for purposes of clarity, it is represented in a closed, or lowered, position.

Possibly, with the slagging door 25 there can be operatively associated a robotic arm, for example anthropomorphic, of a known type and not shown in the drawings, at the end of which there is mounted a device to clean and/or remove any slag residues present on the surfaces of the slagging aperture 22

In accordance with a preferred embodiment of the present invention, the bath temperature can be sampled by means of a sampling probe installed through the perimeter wall 20, or through the roof 15, which can be inserted into and removed from the liquid bath B through electro-mechanical, pneumatic, or other actuation systems. This sampling probe is, in any case, installed in such a way as to keep the atmosphere inside the electric arc furnace 10 insulated from the atmosphere outside it, preventing undesired entries of air.

In accordance with another aspect of the present invention, between an upper surface 27 of the perimeter wall 20 and the corresponding lower part of the roof 15, preferably on the upper surface 27, there is disposed a sealing member 29 of the mechanical type (figs. 1 and 3), for example comprising, or consisting of, a sealing ring or a labyrinth system, configured to make the closure of the roof 15 hermetic, thus preventing the unwanted, or uncontrolled, entry of external air into the melting chamber 16 through the upper aperture 21 of the perimeter wall 20, when the same roof 15 is in the closed position during the melt of the charge. Advantageously, the roof 15 can remain closed for longer periods than the single melt, in particular for several hundred consecutive castings, since the feed of the metal charge C, in particular of the scrap, occurs by means of a lateral charge feed device 50 and/or with the introduction from the roof 15 of DRI/HBI by means of a hopper system, or a hopper, 71, preferably pressurized. Furthermore, one event which may require the roof 15 to be opened is the restoration of the worn refractories of the hearth 12, which can be carried out approximately every 400-800 castings, this in relation to the conditions in which the electric arc furnace 10 is made to operate. Therefore, throughout this entire period of time the electric arc furnace 10 remains closed and sealed, drastically limiting the entries of false air.

The covering roof 15 comprises a central part 30, or arch, preferably made of refractory material, in which there are one or more first secondary apertures, or circular through holes 31 called alveolus, into each of which a respective electrode 32, with a substantially cylindrical shape, can be inserted with clearance. In particular, between the internal surface of each circular through hole 31 and the cylindrical surface of the corresponding electrode 32 there is a certain peripheral clearance, or gap L, which can be of about 50 mm for example. The electrodes 32 are inserted axially in the melting chamber 16 to thus allow the melt of the metal charge M through the striking of an electric arc.

In the example provided here, the electric arc furnace 10 is of the type powered by alternating current (AC) and it is provided with three electrodes 32, as shown in figs. 1, 2 and 4. The present invention, however, does not exclude that these concepts can also be applied to furnaces powered by direct current (DC) which normally use only one or two electrodes.

In the embodiments of the present invention in which it is provided that the insertion of the metal charge M occurs from above, through the upper aperture 21, the roof 15 can be provided with a suction aperture 33 (dashed in fig. 1), also known as "fourth hole", in which suction means can be connected defined by a suction pipe 35 (dashed in fig. 1) of a known type and configured to suction the process fumes present in the melting chamber 16, which are then conveyed toward a primary fume treatment plant, which can be of a known type and is not shown in the drawings. In particular, the action of the suction pipe 35 can bring the part of the melting chamber 16 above the liquid bath B to an operating pressure P.EAF which is lower than the atmospheric pressure P.ATM of the external environment that surrounds the electric arc furnace 10.

In accordance with another aspect of the present invention, above the central part 30 of the roof 15, in correspondence with the zone where the electrodes 32 are present, there is disposed an upper panel 36 shaped so as to define inside it a hollow space 37 facing toward the external surface of the same central part 30.

The upper panel 36 is provided with through apertures 39 (figs. 1 and 4) defined here as second secondary apertures, to allow the passage, with clearance, of the electrodes 32. The through apertures 39 are vertically aligned with the circular through holes 31 and have the same diameter as them, and therefore also the same gaps "L" present inside them. The upper panel 36 is also provided with an additional aperture 40, in which a suction duct 41 is inserted which is connected to a fume treatment plant (primary or secondary), also of a known type and not shown in the drawings.

The hollow space 37 has the function of fluidically insulating the melting chamber 16 of the container 11 at the upper part and in the central zone, that is, where the electrodes 32 are inserted, in order to prevent the unwanted or uncontrolled entry of external air into the melting chamber 16, through the circular through holes 31. In fact, the hollow space 37 is made in such a way as to create an intermediate space between the external environment and the melting chamber 16, inside which a mixed, or intermediate, atmosphere is generated, consisting of both the internal process fumes and also the air of the external environment, which enter the hollow space 37 through the gaps "L" present in each of the circular through holes 31 and in each of the through apertures 39, respectively.

The suction duct 41, which is associated with the hollow space 37, is configured to suction this mixed atmosphere and convey it toward the fume treatment plant. In particular, the action of the suction duct 41 creates a depression inside the hollow space 37 with respect to the atmospheric pressure P.ATM.

Therefore, advantageously, the mixed atmosphere is created, and is then maintained, in the hollow space 37, and it insulates the melting chamber 16 from the external air and has a hollow space pressure P.ELT which is lower than the atmospheric pressure P.ATM and lower than the operating pressure P.EAF which is present in the melting chamber 16, that is, *P.ELT<P.EAF<P.ATM.* In this way, the outflow of the gases present inside the hollow space 37 through the suction duct 41 is promoted. Please note that in order to operate profitably it is advisable that between the hollow space pressure P.ELT and the operating pressure P.EAF there is a difference of at least 15 mmH₂O.

In accordance with one embodiment of the present invention, in the perimeter wall 20 there is also a lateral feed aperture, or loading mouth 43, through which the metal charge M can be introduced, to carry out a substantially continuous loading of the metal charge M itself.

In accordance with one possible embodiment of the present invention, the steel plant 100 (fig. 1) also comprises a feed device 50 which cooperates with the lateral aperture, or loading mouth, 43 of the electric arc furnace 10 and is configured to feed, substantially continuously, the metal charge M.

In accordance with one possible embodiment of the present invention, with the feed device 50 there is associated, at least for a part thereof, a preheating tunnel through which the process fumes produced in the furnace can be suctioned, of a known type and not shown in the drawings.

The feed device 50 (figs. 1, 2, 5A and 5B) comprises a main feed conveyor, of a known type and not shown in the drawings. The last segment of the main conveyor consists of an auxiliary conveyor, hereafter referred to as the connecting conveyor, associated with an axially sliding tubular element, or slide 51, known to the people of skill in the art with the term "connecting car", which is provided with an end 52 configured to selectively enter the loading mouth 43 and discharge the metal charge M inside the melting chamber 16.

The slide 51 is mobile along a sliding axis X between a retracted position, not shown in the drawings, in which the end 52 is completely outside the loading mouth 43 and therefore the electric arc furnace 10, and a loading position (figs. 5A and 5B), in which the end 52 is inserted in the loading mouth 43 and a front surface 53 of the slide 51 is located at a distance D, of a few centimeters, from the perimeter wall 20, in order to be able to move it away from the container 11 to be able to carry out the tilting operations of the electric arc furnace 10 in order to perform the slagging and/or tapping.

In accordance with one aspect of the present invention, a third sealing member is advantageously associated with the loading mouth 43, advantageously a sealed closure device 55, to produce a sealed closure of the loading mouth 43.

The sealed closure device 55 can be connected to the slide 51, that is, to the feed device 50. In particular, the sealed closure device 55 is configured to selectively and hermetically close the loading mouth 43 when the slide 51 is in its loading position, according to the work requirements, thus preventing the unwanted or uncontrolled entry of external air into the melting chamber 16 and adaptively maintaining the seal both during the melt and also during the so-called slagging and/or tapping steps, in which the electric arc furnace 10 is slightly inclined with respect to the unloading plane of the feed device 50.

Furthermore, the sealed closure device 55 can be axially mobile with respect to the slide 51 along the sliding axis X, that is, radially with respect to the container 11 of the electric arc furnace 10.

In the example provided here, the sealed closure device 55 comprises a sleeve 56 which, during use, surrounds the slide 51 and is provided at the front part with a sealing member 57 of the annular type, facing the perimeter wall 20 of the electric arc furnace 10.

The sealed closure device 55 is mounted on mobile sliders 59 disposed on a horizontal plane on opposite parts with respect to the sliding axis X and driven by an actuator, of a known type and not shown in the drawings, to slide parallel to the sliding axis X.

In the embodiment of the present invention shown here, the mobile sliders 59 are coupled, in a known manner, to corresponding guides 60 of the slide 51 by means of respective supports 61. According to other embodiments, not shown in the drawings, the mobile sliders 59 are independent of the slide 51.

One of the advantages of using the sealed closure device 55 is that by insulating the slide 51 and the melting chamber 16 of the container 11 in a sealed manner, it is also possible to optimize the suction of the process fumes, which is performed through the preheating tunnel, for example, by means of the primary fume extraction and treatment plant.

In fact, as normally occurs in known plants, these process fumes are suctioned into the preheating tunnel of the feed device 50, in counter-current with respect to the flow of the metal charge M, in order to preheat the latter before it is introduced inside the container 11. The suction of the fumes occurs by keeping a lower pressure value inside the preheating tunnel than the operating pressure P.EAF present in the melting chamber 16. Preferably, this value decreases gradually along the fume suction duct, with the point with the greatest depression in proximity to the zone of the fans that suction the fumes.

If on the one hand the elimination of the air, with its oxygen content inside the melting chamber, reduces the oxidation of the bath, on the other it allows to limit the suction power by the primary fume plant in order to prevent the escape of the same fumes from the furnace, given that the primary fume plant will have to almost exclusively suction the process fumes and not also large quantities of false air.

In fact, the suction of fumes from the electric arc furnace 10 according to the invention, which prevents or at least greatly limits the entry of air, very significantly reduces the flow rate of the fumes inside, even by between 5 and 7 times.

Limiting the suction power limits the quantity of carbon powder, which is suctioned together with the fumes, and therefore the need to have to inject excessive quantities of carbon into the melting chamber 16 in order to deoxidize the iron which has been oxidized following the action of the oxygen used both for the decarburization of the bath and also for the removal of unwanted elements from the liquid bath, such as silicon, chromium, molybdenum, nickel, phosphorus.

Therefore, by reducing the quantity of carbon injected into the furnace to deoxidize the iron oxide contained in the slag, the quantity of CO which develops from the reaction of the free carbon with the oxygen present is consequently reduced.

Furthermore, by eliminating the entry of false air into the melting chamber, the quantity of oxygen that can react with the free carbon to form CO is consequently limited.

In particular, the use of the continuous charge allows to greatly limit the use of burners. In fact, the latter would be used mostly in the initial step of the melt, in order to help the penetration of the electrodes into the charge, but they would then be superfluous given that the scrap, fed continuously but contained in terms of volume, is able to be gradually assimilated by the melting process.

This limits the necessary combustion of hydrocarbons, which, as previously described, would generate CO and therefore CO₂.

Furthermore, since methane burners normally use excess oxygen, a more limited use of the burners results in a lower supply of excess oxygen which remains unburned inside the melting chamber.

The lower supply of carbon for the deoxidation of the iron oxide, combined with the lower flow of oxygen coming from the false air and from the burners, limits the formation of further CO during the melt.

The CO that forms in the melting chamber as a result of the reactions mentioned can be extracted in two ways:
1) preferentially, by means of the primary fume plant which conveys the fumes through the preheating tunnel of the continuous charge system and in which the CO is burned to release thermal energy for the benefit of the preheating of the metal charge;
2) by means of a dedicated system for the extraction and filtration of CO from the fumes for additional uses as fuel in steelmaking processes, such as, for example, in the burners of the same electric furnace or in the reheating furnaces of rolling mills or in turbines for generating electricity. In fact, using the CO generated in the electric arc furnace 10 as fuel avoids the additional purchase of natural gas (methane) or other fuel, and the consequent formation of additional CO₂ deriving from combustion.

In the first case, the CO mixed with the process fumes is conveyed countercurrent with respect to the metal charge being fed. After a certain segment, air is injected into the preheating tunnel (preferably where it does not cool the metal charge excessively) in order to complete the post-combustion of said CO. Since the entry of air, and therefore of oxygen, into the electric arc furnace 10, as well as the carbon used for the deoxidation of the iron, have been eliminated or severely limited, the total CO is generated in lower quantities than in the state of the art, whereby a smaller amount of air is needed for the post-combustion of the CO and, therefore, the resulting CO₂, as well as the risk of NO_{X} formation, is proportionally lower. Since there are lower flue flow rates than in the state of the art, their cooling below 850°C and their treatment also become easier.

To increase the cooling effect of the fumes, it is possible to dispose an injector in the preheating tunnel, not shown in the drawings, able to deliver steam, which has the task of cooling and diluting the fumes, thus making them less reactive.

This placement is particularly advantageous downstream of the post-combustion zone and further helps to prevent the formation of NO_{X}.

Furthermore, another advantage of the present invention is that the electric arc furnace 10 provides a segmentation of the pressures into different pressure ranges, thus differing from the electric arc furnaces of the state of the art, in which, due to all the apertures present in the furnace, the fume suction process provides that there is a pressure inside the furnace comparable to that of the external environment, therefore the suction of the fumes has to be carried out with very high depression values.

In particular, to obtain an optimal effect in the suction of the melting fumes, to use them appropriately for preheating purposes without risking mixing them with the external air, the following relation has to be respected: *P.ELT<PECS<P.EAF<P.ATM*, where P.ELT is the pressure acting in the hollow space in the cell/electrode zone of the roof, P.ECS is the pressure acting in the zone of the slide 51 (connecting car) of the metal charge feed device 50, P.EAF is the pressure of the atmosphere above the volume of molten metal and slag and P.ATM is the ambient pressure.

Purely by way of example, the optimal levels of the four pressures disclosed above are the following:
- P.ELT, approximately between -35 and -25 mmH₂O;
- P.ECS, minimum -20 mmH₂O;
- P.EAF, approximately between -10 and -1 mmH₂O;
- P.ATM, around 1.033·10⁴ mmH₂O.

In accordance with other embodiments of the present invention, the steel plant 100 can also comprise other feed devices, as a replacement for or in combination with the feed device 50. For example, directly reduced iron (DRI) or hot briquetted iron (HBI) can be used, the feed of the latter can be carried out by means of an additional feed device 70 through the roof of the furnace, schematically represented with dashed lines in fig. 1. The additional feed device 70 can comprise, or consist of, a hopper 71, preferably pressurized with inert gas and provided with a feed duct or pipe 72, of a known type, which can be inserted, in a sealed manner, into an additional through aperture 73, also known as the "fifth hole", created in the roof 15, substantially on the opposite part with respect to the suction aperture 33. In this way, the feed can be performed from above, feeding DRI or HBI in a central zone of the melting chamber 16. Furthermore, this additional through aperture 73 is preferably disposed at a certain distance from the suction pipe 35, so as to prevent the latter from also suctioning parts and/or pieces of DRI or HBI in free fall toward the melting chamber 16.

Advantageously, the pressure inside the hopper 71 is greater than the atmospheric pressure P.ATM; in this way, when the DRI or HBI is introduced into the melting chamber 16, the combustion fumes present in the latter do not escape outside.

Furthermore, in the event that the electric arc furnace 10 is fed only by means of the additional feed device 70, the relation relating to the pressures, indicated above, is simplified to *P.ELT<P.EAF<P.ATM*, since the hollow space pressure P.ELT is lower than both the operating pressure P.EAF of the melting chamber 16 and also the atmospheric pressure P.ATM.

It is clear that modifications and/or additions of parts may be made to the electric arc furnace 10 as described heretofore, without departing from the field and scope of the present invention, as defined by the claims.

For example, in accordance with other embodiments of the present invention, the loading mouth 43 into which the end 53 of the slide 51 can be inserted could be made on a lateral surface of the roof 15.

It is also clear that, although the present invention has been described with reference to some specific examples, a person of skill in the art shall certainly be able to achieve many other equivalent forms of electric arc furnaces and/or steel plants, having the characteristics as set forth in the claims and hence all coming within the field of protection defined thereby.

In the following claims, the sole purpose of the references in brackets is to facilitate their reading and they must not be considered as restrictive factors with regard to the field of protection defined by the same claims.

## Claims

1. Electric arc furnace (10) usable for melting a metal charge (M) comprising both a container (11) having a melting chamber (16) and a plurality of main apertures (21, 22, 43), which include at least an upper aperture (21), a first lateral outlet aperture (22) to remove the slag that forms on the surface of said molten metal charge (M), and a second lateral feed aperture (43) to feed said metal charge (M) into said melting chamber (16), and also a cover (15) that can be positioned on said upper aperture (21) to selectively close it, wherein said cover (15) is provided with one or more first secondary apertures (31) into which respective electrodes (32) can be inserted with clearance to melt said metal charge (M), **characterized in that** it also comprises sealing means (26, 29, 37, 55), at least one of which is associated with at least one of said main apertures (21, 22, 43), in such a way as to prevent, or limit as much as possible, the unwanted or uncontrolled entry of air coming from the external environment into melting chamber (16), at least during the process of melting said metal charge (M), wherein said sealing means comprise at least a hollow space (37) with the function to fluidly insulate said container (11) in correspondence of said electrodes (32).

2. Electric arc furnace (10) as in claim 1, wherein said cover (15) comprises a central part (30) in which said one or more first secondary apertures (31) are present, which are communicating fluidically with said melting chamber (16), **characterized in that** on said central part (30) there is disposed an upper panel (36) in which there are one or more second secondary apertures (39), vertically aligned with said one or more first secondary apertures (31) for the passage of said electrodes (32) and communicating fluidically with said external environment, **and in that** said hollow space (37) is made between said upper panel (36) and said central part (30), wherein said hollow space (37) communicates fluidically both with said one or more first secondary apertures (31) and also with said one or more second secondary apertures (39).

3. Electric arc furnace (10) as in claim 2, **characterized in that** said hollow space (37) is made in such a way as to create an intermediate space between said external environment and said melting chamber (16), inside which there is created a mixed atmosphere which comprises both process fumes coming from said melting chamber (16) and also air coming from said external environment, both of which can enter said hollow space (37) through said one or more first secondary apertures (31) and, respectively, through said one or more second secondary apertures (39).

4. Electric arc furnace (10) as in any claim hereinbefore, **characterized in that** with said hollow space (37) there is associated a suction mean (41) configured to suction said mixed atmosphere and thus create a depression in said hollow space (37) so that, inside the latter, there is a hollow space pressure (P.ELT) which is lower than the atmospheric pressure (P.ATM) of said external environment and than an operating pressure (P.EAF) present inside said melting chamber (16).

5. Electric arc furnace (10) as in any claim hereinbefore, wherein said container (11) comprises at least one perimeter wall (20) at the top of which said upper aperture (21) is present, **characterized in that** a first sealing member (29) is interposed between said perimeter wall (20) and said cover (15) and is configured to make the closure of said cover (15) hermetic.

6. Electric arc furnace (10) as in claim 5, **characterized in that** said first sealing member (29) is at least partly disposed on an upper surface (27) of said perimeter wall (20) and comprises one or more sealing elements capable of guaranteeing a hermetic seal at least under the action of the weight of said cover (15).

7. Electric arc furnace (10) as in claim 1, **characterized in that** it also comprises a closing member (25) associated with said first lateral outlet aperture (22), **and in that** a second sealing member (26) is associated with said closing member (25) to hermetically insulate said lateral outlet aperture (22) at least when said closing member (25) is in a lowered position.

8. Electric arc furnace (10) as in claim 1, **characterized in that** a third sealing member (55) is associated with said second lateral feed aperture (43) in order to create a sealed closure thereof.

9. Electric arc furnace (10) as in any claim hereinbefore, **characterized in that** said cover (15) also comprises an additional through aperture (73) to which feed means (70) can be connected, which are configured to feed, from above, directly reduced iron or hot briquetted iron, **and in that** said feed means (70) comprise both a feed duct (72), which can be inserted, preferably in a sealed manner, in said additional through aperture (73), and also a hopper (71), connected to said feed duct and preferably pressurized.

10. Electric arc furnace (10) as in claim 9, **characterized in that** said cover (15) also comprises a suction aperture (33) to which suction means (35) can be connected which are configured to suction the process fumes from said melting chamber (16), **and in that** said suction aperture (33) is disposed substantially on the opposite part to said additional through aperture (73) with respect to said first secondary apertures (31).

11. Steel plant (100) comprising an electric arc furnace (10) to melt a metal charge (M) as in any claim hereinbefore, and a feed device (50) to continuously feed said metal charge (M) with which there is associated, at least for a part, a preheating tunnel, and which comprises a slide (51) provided with an end (52) which can be selectively inserted, at least partly, into said feed aperture (43), **characterized in that** the third sealing member is a sealed closure device (55), **and in that** said sealed closure device (55) can be connected to said slide (51), said sealed closure device (55) being configured to selectively close in a sealed manner the space possibly existing between said slide (51) and said electric arc furnace (10) when said end (52) is inserted in said second lateral feed aperture (43), said sealing means (26, 29, 37) and said sealed closure device (55) being such as to prevent, or limit as much as possible, the unwanted or uncontrolled entry of air from the external environment into said electric arc furnace (10).

12. Steel plant (100) as in claim 11, **characterized in that** said sealed closure device (55) comprises a sleeve (56) which, during use, surrounds said slide (51) and has a front surface (53) facing toward and able to be associated with said electric arc furnace (10) and provided with an additional sealing member (57) configured to contact a perimeter wall (20) of said electric arc furnace (10) in correspondence with said feed aperture (43).

## Patentansprüche

1. Elektrischer Lichtbogenofen (10), verwendbar zum Schmelzen einer Metallcharge (M), umfassend sowohl einen Behälter (11) mit einer Schmelzkammer (16) als auch eine Vielzahl von Hauptöffnungen (21, 22, 43), die zumindest eine obere Öffnung (21), eine erste seitliche Austrittsöffnung (22) zum Entfernen der Schlacke, die sich auf der Oberfläche der geschmolzenen Metallcharge (M) bildet, und eine zweite seitliche Einführungsöffnung (43) zum Einführen der Metallcharge (M) in die Schmelzkammer (16) umfassen, sowie auch eine Abdeckung (15), die auf die obere Öffnung (21) aufgesetzt werden kann, um sie wahlweise zu verschließen, wobei die Abdeckung (15) mit einer oder mehreren ersten Sekundäröffnungen (31) versehen ist, in die jeweilige Elektroden (32) mit Spiel eingeführt werden können, um die Metallcharge (M) zu schmelzen, **dadurch gekennzeichnet, dass** er außerdem Dichtmittel (26, 29, 37, 55) umfasst, von denen wenigstens eines wenigstens einer der Hauptöffnungen (21, 22, 43) zugeordnet ist, derart, dass der unerwünschte oder unkontrollierte Eintritt von Luft aus der äußeren Umgebung in die Schmelzkammer (16) hinein verhindert oder soweit wie möglich begrenzt wird, und zwar zumindest während des Prozesses des Schmelzens der Metallcharge (M), wobei die Dichtmittel wenigstens einen Hohlraum (37) beinhalten, der die Funktion hat, den Behälter (11) in Entsprechung zu den Elektroden (32) fluidisch zu isolieren.

2. Elektrischer Lichtbogenofen (10) nach Anspruch 1, wobei die Abdeckung (15) einen Mittelteil (30) umfasst, in dem die eine oder mehreren ersten Sekundäröffnungen (31) vorhanden sind, die fluidisch mit der Schmelzkammer (16) in Verbindung stehen, **dadurch gekennzeichnet, dass** auf dem Mittelteil (30) ein oberes Paneel (36) angeordnet ist, in dem eine oder mehreren zweiten Sekundäröffnungen (39) vorhanden sind, die vertikal mit der einen oder den mehreren ersten Sekundäröffnungen (31) zur Durchleitung der Elektroden (32) ausgerichtet und fluidisch mit der äußeren Umgebung verbunden sind, und dass der Hohlraum (37) zwischen dem oberen Paneel (36) und dem Mittelteil (30) ausgebildet ist, wobei der Hohlraum (37) fluidisch sowohl mit der einen oder den mehreren ersten Sekundäröffnungen (31) als auch mit der einen oder den mehreren zweiten Sekundäröffnungen (39) in Verbindung steht.

3. Elektrischer Lichtbogenofen (10) nach Anspruch 2, **dadurch gekennzeichnet, dass** der Hohlraum (37) derart ausgebildet ist, dass ein Zwischenraum zwischen der äußeren Umgebung und der Schmelzkammer (16) geschaffen wird, innerhalb dessen eine Mischatmosphäre gebildet wird, die sowohl Prozessgase umfasst, die aus der Schmelzkammer (16) stammen, als auch Luft aus der äußeren Umgebung, wobei beide durch die eine oder die mehreren ersten Sekundäröffnungen (31) bzw. durch die eine oder die mehreren zweiten Sekundäröffnungen (39) in den Hohlraum (37) eintreten können.

4. Elektrischer Lichtbogenofen (10) nach einem beliebigen vorherigen Anspruch,
**dadurch gekennzeichnet, dass** dem Hohlraum (37) ein Absaugmittel (41) zugeordnet ist, das dazu ausgestaltet ist, dass es die Mischatmosphäre absaugt und dadurch in dem Hohlraum (37) einen Unterdruck erzeugt, so dass in diesem ein Hohlraumdruck (P.ELT) herrscht, der niedriger ist als der atmosphärische Druck (P.ATM) der äußeren Umgebung und als ein Betriebsdruck (P.EAF), der in der Schmelzkammer (16) herrscht.

5. Elektrischer Lichtbogenofen (10) nach einem beliebigen vorherigen Anspruch, wobei der Behälter (11) wenigstens eine Umfangswand (20) umfasst, an deren oberem Ende die obere Öffnung (21) vorhanden ist, **dadurch gekennzeichnet, dass** ein erstes Dichtelement (29) zwischen der Umfangswand (20) und der Abdeckung (15) angeordnet ist und dazu ausgestaltet ist, dass der Verschluss der Abdeckung (15) hermetisch erfolgt.

6. Elektrischer Lichtbogenofen (10) nach Anspruch 5, **dadurch gekennzeichnet, dass** das erste Dichtelement (29) zumindest teilweise auf einer oberen Fläche (27) der Umfangswand (20) angeordnet ist und ein oder mehrere Dichtelemente umfasst, das bzw. die dazu in der Lage ist/sind, eine hermetische Abdichtung zumindest unter der Wirkung des Gewichts der Abdeckung (15) zu gewährleisten.

7. Elektrischer Lichtbogenofen (10) nach Anspruch 1, **dadurch gekennzeichnet, dass** er außerdem ein Verschlusselement (25) umfasst, das der ersten seitlichen Austrittsöffnung (22) zugeordnet ist, und dass ein zweites Dichtelement (26) dem Verschlusselement (25) zugeordnet ist, um die seitliche Austrittsöffnung (22) zumindest dann hermetisch zu isolieren, wenn das Verschlusselement (25) sich in einer abgesenkten Position befindet.

8. Elektrischer Lichtbogenofen (10) nach Anspruch 1, **dadurch gekennzeichnet, dass** ein drittes Dichtelement (55) der zweiten seitlichen Einführungsöffnung (43) zugeordnet ist, um einen abgedichteten Verschluss derselben zu erzeugen.

9. Elektrischer Lichtbogenofen (10) nach einem der vorhergehenden Ansprüche,
**dadurch gekennzeichnet, dass** die Abdeckung (15) außerdem eine zusätzliche Durchgangsöffnung (73) umfasst, an die Zuführmittel (70) angeschlossen werden können, die dazu ausgestaltet sind, dass sie von oben direktreduziertes Eisen oder heißbrikettiertes Eisen zuführen, und dass die Zuführmittel (70) sowohl einen Zuführkanal (72) umfassen, der vorzugsweise in abgedichteter Weise in die zusätzliche Durchgangsöffnung (73) eingeführt werden kann, als auch einen Trichter (71), der mit dem Zuführkanal verbunden und vorzugsweise unter Druck gesetzt ist.

10. Elektrischer Lichtbogenofen (10) nach Anspruch 9, **dadurch gekennzeichnet, dass** die Abdeckung (15) außerdem eine Absaugöffnung (33) umfasst, an die Absaugmittel (35) angeschlossen werden können, die dazu ausgestaltet sind, dass sie die Prozessgase aus der Schmelzkammer (16) absaugen, und dass die Absaugöffnung (33) im Wesentlichen auf der der zusätzlichen Durchgangsöffnung (73) gegenüberliegenden Seite in Bezug auf die ersten Sekundäröffnungen (31) angeordnet ist.

11. Stahlwerk (100), umfassend einen elektrischen Lichtbogenofen (10) zum Schmelzen einer Metallcharge (M) nach einem der vorhergehenden Ansprüche und eine zum kontinuierlichen Zuführen der Metallcharge (M) dienende Zuführeinrichtung (50), der zumindest teilweise ein Vorwärmtunnel zugeordnet ist und die eine Rutsche (51) umfasst, die mit einem Ende (52) versehen ist, das wahlweise zumindest teilweise in die Einführungsöffnung (43) eingeführt werden kann, **dadurch gekennzeichnet, dass** das dritte Dichtelement eine abgedichtete Verschlussvorrichtung (55) ist und dass die abgedichtete Verschlussvorrichtung (55) mit der Rutsche (51) verbunden werden kann, wobei die abgedichtete Verschlussvorrichtung (55) dazu ausgestaltet ist, dass sie den gegebenenfalls vorhandenen Raum zwischen der Rutsche (51) und dem Lichtbogenofen (10) wahlweise in abgedichteter Weise verschließt, wenn das Ende (52) in die zweite seitliche Einführungsöffnung (43) eingeführt ist, wobei die Dichtmittel (26, 29, 37) und die abgedichtete Verschlussvorrichtung (55) derart ausgebildet sind, dass der unerwünschte oder unkontrollierte Eintritt von Luft aus der äußeren Umgebung in den elektrischen Lichtbogenofen (10) verhindert oder soweit wie möglich begrenzt wird.

12. Stahlwerk (100) nach Anspruch 11, **dadurch gekennzeichnet, dass** die abgedichtete Verschlussvorrichtung (55) eine Hülse (56) umfasst, die während des Gebrauchs die Rutsche (51) umgibt und eine Vorderfläche (53) aufweist, die zu dem Lichtbogenofen (10) hin ausgerichtet und diesem zugeordnet werden kann und die mit einem zusätzlichen Dichtelement (57) versehen ist, das dazu ausgestaltet ist, dass es mit einer Umfangswand (20) des elektrischen Lichtbogenofens (10) in Entsprechung zu der Einführungsöffnung (43) in Kontakt tritt.

## Revendications

1. Four à arc électrique (10) utilisable pour fondre une charge métallique (M) comprenant à la fois un conteneur (11) ayant une chambre de fusion (16) et une pluralité d'ouvertures principales (21, 22, 43), qui comprennent au moins une ouverture supérieure (21), une première ouverture latérale de sortie (22) pour éliminer le résidu qui se forme à la surface de ladite charge métallique fondue (M), et une deuxième ouverture latérale d'alimentation (43) pour introduire ladite charge métallique (M) dans ladite chambre de fusion (16), et aussi un couvercle (15) qui peut être positionné sur ladite ouverture supérieure (21) pour la fermer sélectivement, dans lequel ledit couvercle (15) est muni d'une ou plusieurs premières ouvertures secondaires (31) dans lesquelles des électrodes respectives (32) peuvent être insérées avec un certain jeu pour fondre ladite charge métallique (M), **caractérisé en ce qu'**il comprend également des moyens de scellement (26, 29, 37, 55), dont au moins un est associé à au moins une desdites ouvertures principales (21, 22, 43), de manière à empêcher, ou à limiter autant que possible, l'entrée involontaire ou incontrôlée d'air provenant de l'environnement extérieur dans la chambre de fusion (16), au moins pendant le processus de fusion de ladite charge métallique (M), dans lequel lesdits moyens de scellement comprennent au moins un espace creux (37) ayant pour fonction d'isoler fluidiquement ledit conteneur (11) en correspondance avec lesdites électrodes (32).

2. Four à arc électrique (10) selon la revendication 1, dans lequel ledit couvercle (15) comprend une partie centrale (30) dans laquelle sont présentes une ou plusieurs premières ouvertures secondaires (31), qui communiquent fluidiquement avec ladite chambre de fusion (16), **caractérisé en ce qu'**une partie supérieure (36) est disposée sur ladite partie centrale (30) dans laquelle il y a une ou plusieurs secondes ouvertures secondaires (39), alignées verticalement avec ladites une ou plusieurs premières ouvertures secondaires (31) pour le passage desdites électrodes (32) et communiquant fluidiquement avec ledit environnement extérieur, et **en ce que** ledit espace creux (37) est réalisé entre ladite partie supérieure (36) et ladite partie centrale (30), dans lequel ledit espace creux (37) communique fluidiquement à la fois avec dites une ou plusieurs premières ouvertures secondaires (31) et aussi avec dites une ou plusieurs secondes ouvertures secondaires (39).

3. Four à arc électrique (10) selon la revendication 2, **caractérisé en ce que** ledit espace creux (37) est réalisé de manière à créer un espace intermédiaire entre ledit environnement extérieur et ladite chambre de fusion (16), à l'intérieur duquel se crée une atmosphère mixte comprenant à la fois des fumées de processus provenant de ladite chambre de fusion (16) et aussi de l'air provenant dudit environnement extérieur, chacun pouvant pénétrer dans ledit espace creux (37) via lesdites premières ouvertures secondaires (31) et, respectivement, via lesdites secondes ouvertures secondaires (39).

4. Four à arc électrique (10) selon l'une quelconque des revendications précédemment mentionnées, **caractérisé en ce qu'**un moyen d'aspiration (41) est associé audit espace creux (37), configuré pour aspirer ladite atmosphère mixte et ainsi créer une dépression dans ledit espace creux (37) de sorte qu'à l'intérieur de ce dernier, il y ait une pression d'espace creux (P.ELT) qui est inférieure à la pression atmosphérique (P.ATM) dudit environnement extérieur et à la pression de fonctionnement (P.EAF) présente dans ladite chambre de fusion (16).

5. Four à arc électrique (10) selon l'une quelconque des revendications précédemment mentionnées, dans lequel ledit conteneur (11) comprend au moins une paroi périmétrique (20) au sommet de laquelle est située ladite ouverture supérieure (21), **caractérisé en ce qu'**un premier moyen de scellement (29) est interposé entre ladite paroi périmétrique (20) et ledit couvercle (15) et est configuré pour rendre la fermeture dudit couvercle (15).

6. Four à arc électrique (10) selon la revendication 5, **caractérisé en ce que** ledit premier moyen de scellement (29) est au moins partiellement disposé sur une surface supérieure (27) de ladite paroi périmétrique (20) et comprend un ou plusieurs éléments de scellement capables de garantir une étanchéité hermétique au moins sous l'effet du poids dudit couvercle (15).

7. Four à arc électrique (10) selon la revendication 1, **caractérisé en ce qu'**il comprend également un élément de fermeture (25) associé à ladite première ouverture latérale de sortie (22), et **en ce qu'**un deuxième moyen de scellement (26) est associé audit élément de fermeture (25) pour isoler hermétiquement ladite ouverture latérale de sortie (22) au moins lorsque ledit élément de fermeture (25) est en position abaissée.

8. Four à arc électrique (10) selon la revendication 1, **caractérisé en ce qu'**un troisième moyen de scellement (55) est associé à ladite deuxième ouverture latérale d'alimentation (43) afin de créer une fermeture étanche de celle-ci.

9. Four à arc électrique (10) selon l'une quelconque des revendications précédemment mentionnées, **caractérisé en ce que** ledit couvercle (15) comprend également une ouverture supplémentaire (73) à travers laquelle des moyens d'alimentation (70) peuvent être connectés, configurés pour alimenter, par le haut, directement du fer réduit ou du fer briqueté à chaud, et **en ce que** lesdits moyens d'alimentation (70) comprennent à la fois un conduit d'alimentation (72), pouvant être inséré, de préférence de manière étanche, dans ladite ouverture supplémentaire (73), et aussi une trémie (71), connectée audit conduit d'alimentation et de préférence pressurisée.

10. Four à arc électrique (10) selon la revendication 9, **caractérisé en ce que** ledit couvercle (15) comprend également une ouverture de succion (33) à laquelle des moyens de succion (35) peuvent être connectés, configurés pour aspirer les fumées de processus de ladite chambre de fusion (16), et **en ce que** ladite ouverture de succion (33) est disposée sensiblement sur la partie opposée à ladite ouverture supplémentaire (73) par rapport aux dites premières ouvertures secondaires (31).

11. Usine sidérurgique (100) comprenant un four à arc électrique (10) pour fondre une charge métallique (M) selon l'une quelconque des revendications précédemment mentionnées, et un dispositif d'alimentation (50) pour alimenter en continu ladite charge métallique (M) à laquelle est associé, au moins en partie, un tunnel de préchauffage, et qui comprend une glissière (51) munie d'une extrémité (52) pouvant être insérée sélectivement, au moins partiellement, dans ladite ouverture latérale d'alimentation (43), **caractérisée en ce que** le troisième moyen de scellement est un dispositif de fermeture étanche (55), et **en ce que** ledit dispositif de fermeture étanche (55) peut être connecté à ladite glissière (51), ledit dispositif de fermeture étanche (55) étant configuré pour fermer de manière étanche, de manière sélective, l'espace éventuellement existant entre ladite glissière (51) et ledit four à arc électrique (10) lorsque ladite extrémité (52) est insérée dans ladite deuxième ouverture latérale d'alimentation(43), lesdits moyens de scellement (26, 29, 37) et ledit dispositif de fermeture étanche (55) étant tels qu'ils empêchent, ou limitent autant que possible, l'entrée involontaire ou incontrôlée de l'air provenant de l'environnement extérieur dans ledit four à arc électrique (10).

12. Usine sidérurgique (100) selon la revendication 11, **caractérisée en ce que** ledit dispositif de fermeture étanche (55) comprend une manchette (56) qui, lors de l'utilisation, entoure ladite glissière (51) et a une surface frontale (53) orientée vers et pouvant être associée audit four à arc électrique (10) et munie d'un membre de scellement supplémentaire (57) configuré pour entrer en contact avec une paroi périmétrique (20) dudit four à arc électrique (10) en correspondance avec ladite ouverture latérale d'alimentation (43).
